# EUROPÄISCHE PATENTSCHRIFT

(11) **EP 3 475 202 B1**
(45) Veröffentlichungstag und Bekanntmachung des Hinweises auf die Patenterteilung: **10.11.2021**
(21) Anmeldenummer: 17732398.7
(22) Anmeldetag: 21.06.2017
(51) Int. Cl.: B65G 63/00, G05D 1/02

(54) **SYSTEM ZUM TRANSPORT VON CONTAINERN MITTELS AUTOMATISCH UND MANUELL GEFÜHRTER SCHWERLASTFAHRZEUGEN**
SYSTEM FOR TRANSPORTING CONTAINERS USING AUTOMATED AND MANUALLY DRIVEN HEAVY GOODS VEHICLES
SYSTÈME DE TRANSPORT DE CONTENEURS AU MOYEN DE VÉHICULE POUR CHARGES LOURDES GUIDÉS AUTOMATIQUEMENT ET MANUELLEMENT

(30) Priorität: 22.06.2016 DE 102016111447
(43) Veröffentlichungstag der Anmeldung: 01.05.2019
(73) Patentinhaber: Konecranes Global Corporation, 05830 Hyvinkää (FI)
(72) Erfinder: WIESCHEMANN, Armin, 46119 Oberhausen (DE); ALDEJOHANN, Stefan, 40764 Langenfeld (DE); SCHULZ, Heiko, 51381 Leverkusen (DE); SCHMIDT-EWIG, Jan-Philipp, 45239 Essen (DE); EICHNER, Heinz, 40878 Ratingen (DE)
(74) Vertreter: Moser Götze & Partner Patentanwälte mbB
(86) Internationale Anmeldenummer: PCT/EP2017/065164
(87) Internationale Veröffentlichungsnummer: WO 2017/220626

(56) Entgegenhaltungen:
- JP-A- 2000 044 063
- JP-A- 2003 292 167
- JP-A- 2009 196 777
- JP-A- 2014 196 162

## Beschreibung

Die Erfindung betrifft ein System gemäß dem Oberbegriff von Anspruch 1. Ein derartiges System ist aus der JP 2000 044 063 A bekannt.

Schwerlastfahrzeuge im Sinne der vorliegenden Erfindung sind Flurförderfahrzeuge, die für die Handhabung und/oder den Transport von entsprechenden Containern in speziellen Terminals, insbesondere Hafenterminals, ausgelegt sind. Solche Container können insbesondere im Fall von ISO-Containern im beladenen Zustand bis zu 40 t wiegen und normierte oder zumindest standardisierte Längen von zum Beispiel 10, 20, 40, 45, 53 oder 60 Fuß (die beiden letztgenannten Längen werden bisher als nicht ISO genormte Container ausschließlich in Nordamerika eingesetzt) aufweisen. In diesem Zusammenhang werden unter ISO-Containern genormte Großraumbeziehungsweise Seefrachtcontainer verstanden, die im internationalen Warenverkehr zum Einsatz kommen. In den Terminals werden entsprechende Container zwischen mindestens zwei Transportmitteln gleicher oder unterschiedlicher Art umgeschlagen, beispielsweise zwischen Schiffen, Straßen- und/oder Schienenfahrzeugen. In den Terminals kann daher auch ein entsprechend kombinierter Verkehr zwischen Wasser, Straße und/oder Schiene stattfinden. In diesem Zusammenhang können Container auch andere normierte oder zumindest standardisierte Ladungsträger wie beispielsweise Wechselaufbauten, insbesondere Wechselbehälter oder Wechselbrücken, sein.

Zu derartigen Schwerlastfahrzeugen zählen damit insbesondere Spezialfahrzeuge, die als interne Schwerlastfahrzeuge nur innerbetrieblich innerhalb solcher Terminals betrieben werden und in der Regel nicht für den öffentlichen Verkehr zugelassen sind. Diese Schwerlastfahrzeuge sind daher strikt vom öffentlichen Verkehr getrennt zu betreiben. Als ein möglicher Fahrzeugtyp solcher Schwerlastfahrzeuge werden beispielsweise spezielle Containertransportfahrzeuge eingesetzt, die eine von zueinander beabstandeten Führungselementen begrenzte Ladefläche aufweisen. Die Führungselemente werden auch als Einweiser bezeichnet und führen einen aufzunehmenden Container beziehungsweise dessen Eckbeschläge auf die Ladefläche. Hierfür erstrecken sich die Führungselemente mit ihren Führungsflächen schräg nach außen und oben von der Ladefläche weg. Die Ladefläche kann hierbei auch als Teil einer heb- und senkbaren Hubplattform ausgebildet sein. Derartige Containertransportfahrzeuge sind beispielsweise aus der EP 2 637 954 B1 bekannt. Auch eine als Terminal Truck oder Terminal Tractor bezeichnete Zugmaschine kann für sich genommenen oder zusammen mit einem oder mehreren Anhängern als eine Art Sattelzug einen Fahrzeugtyp von Schwerlastfahrzeugen im Sinne der vorliegenden Erfindung bilden. Deren Ladefläche für die Aufnahme der Ladungsträger ist dann jeweils an dem oder den Anhängern vorgesehen. Derartige Schwerlastfahrzeuge sind beispielsweise aus DE 10 2012 108 768 A1 bekannt. Auch Portalhubgeräte stellen einen Fahrzeugtyp von Schwerlastfahrzeugen im Sinne der vorliegenden Erfindung dar. Diese Schwerlastfahrzeuge sind beispielsweise in der EP 2 694 424 B1 beschrieben. Derartige Portalhubgeräte, die auch Portalhubstapelwagen, Portalstapelwagen, Straddle Carrier, Van Carrier, Shuttle Carrier oder Runner genannt werden, werden nicht nur als Schwerlastfahrzeug für einen Containertransport im Horizontalverkehr, sondern insbesondere auch als spezielle Umschlaggeräte für ISO-Container eingesetzt. Mit Hilfe einer Hubvorrichtung und einem als Spreader bezeichneten Lastaufnahmemittel können Portalhubgeräte Container anheben und nach einem Transport an einem Zielort abstellen. Da die Portalhubgeräte einen spinnenbeinartigen Aufbau aufweisen, können diese einen auf dem Boden oder auf einem anderen Container ruhenden Container überfahren und hierbei zusätzlich je nach Bauweise auch einen angehobenen Container transportieren. Je nach Bauhöhe werden die Portalhubgeräte beispielsweise als 1 über 3-Geräte, 1 über 2- Geräte usw. bezeichnet. Ein 1 über 3-Gerät kann einen Container auf 3 gestapelte Container absetzen, den obersten von 4 gestapelten Containern aufnehmen oder 3 gestapelte Container mit einem aufgenommenen Container überfahren.

Die vorgenannten Schwerlastfahrzeuge können manuell geführt werden und dementsprechend insbesondere beim Beschleunigen, Bremsen und Lenken von üblicherweise mitfahrenden Fahrern aktiv gesteuert werden. Hierfür weisen manuell geführte Schwerlastfahrzeuge eine entsprechende Fahrzeugsteuerung und üblicherweise auch eine Fahrerkabine auf, aus der zum manuellen Führen ein manuelles Eingreifen in die Fahrzeugsteuerung erfolgen kann. Alternativ können die Schwerlastfahrzeuge auch automatisch geführt sein und dementsprechend insbesondere beim Beschleunigen, Bremsen und Lenken im Sinne so genannter Automated Guided Vehicles (AGV) automatisiert gesteuert werden. Hierfür weisen automatisch geführte Schwerlastfahrzeuge eine geeignete Fahrzeugsteuerung auf, so dass aufgrund der hierüber erfolgenden automatischen Steuerung beziehungsweise Navigation kein aktives manuelles Eingreifen eines mitfahrenden Fahrers erforderlich oder möglich ist. In diesem Sinne kann ein automatisch geführtes Schwerlastfahrzeug auch bemannt sein, wenn ein Fahrer mitfährt, hierbei jedoch nicht im Sinne eines Fahrzeugführers aktiv in die Steuerung des Schwerlastfahrzeugs eingreifen muss oder kann. Fahrerlose, aber von einem Fahrzeugführer manuell ferngesteuerte Schwerlastfahrzeuge gelten nicht als automatisch geführte, sondern als manuell geführte Fahrzeuge.

Ebenfalls bekannt sind konventionelle Lkw, insbesondere Sattelzüge, die für den Transport entsprechender normierter Ladungsträger im öffentlichen Verkehr zugelassen sind und eingesetzt werden. Derartige auch als Road Trucks bezeichnete Fahrzeuge stellen ebenfalls einen Fahrzeugtyp manuell geführter Schwerlastfahrzeuge im Sinne der vorliegenden Erfindung dar. Diese Schwerlastfahrzeuge werden nachfolgend als externe manuell geführte Schwerlastfahrzeuge bezeichnet, da sie auch außerhalb entsprechender Terminals im öffentlichen Verkehr eingesetzt werden können.

Systeme der vorliegend betroffenen Art können auch Teil eines Containerterminals, beispielsweise eines Hafenterminals, sein. Hierbei ist ein solches System in den Umschlag von Containern, das heißt das entsprechende Be- und Entladen von Schwerlastfahrzeugen, Schiffen und/oder Schienenfahrzeugen, eingebunden. In diesem Zusammenhang transportieren die zuvor genannten Schwerlastfahrzeuge die Container beispielsweise auf der Wasserseite eines Containerlagers zwischen dem Containerlager und einer Containerbrücke zum Löschen beziehungsweise Beladen eines am Kai anliegenden Schiffs mit Ladungsträgern.

In diesem Sinne ist aus der europäischen Patentschrift EP 2 637 954 B1 in Bezug auf ein Containerterminal auch ein System für den Umschlag von Containern bekannt, das als separaten Betriebsbereich einen Automatik-Bereich und einen hiervon über einen Zaun getrennten Manuell-Bereich aufweist. In dem wasserseitig bezüglich eines Containerlagers angeordneten Automatik-Bereich dürfen ausschließlich interne automatisch geführte Containertransportfahrzeuge und weder interne noch externe manuell geführte Containertransportfahrzeuge betrieben werden. Der Automatik-Bereich ist über einen Zaun gegen einen unberechtigten Zutritt von Personen und gegen die Einfahrt von manuell geführten Schwerlastfahrzeugen geschützt.

Aus der US 9,546,054 B1 ist ein vergleichbares System bekannt, das einen Manuell-Bereich für manuell geführte Schwerlastfahrzeuge und als separaten Betriebsbereich einen von dem Manuell-Bereich über eine Barriere getrennten Automatik-Bereich für automatisch geführte Schwerlastfahrzeuge aufweist.

Aus der US 2006/0045659 A1 ist ein Containerterminal für den Umschlag von Containern zwischen Schiffen und externen Schienenfahrzeugen des Bahnverkehrs bekannt. Hierbei werden Container wasserseitig von internen Schwerlastfahrzeugen zwischen Schiffen und einem Zwischenlager transportiert. Der landseitige An- und Abtransport von Containern zu und von dem Zwischenlager erfolgt mittels der externen Schienenfahrzeuge, wofür entsprechende Schienenwege in das Containerterminal hinein und an das Zwischenlager heran geführt sind.

Weitere Systeme zum Transport von Containern mittels Schwerlastfahrzeugen sind aus JP 2009 196 777 A, JP 2014 196 162 A sowie JP 2003 292 167 A bekannt.

Auch ist es bekannt, in einem Containerterminal interne und externe manuell geführte Schwerlastfahrzeuge in einem Mischverkehr zu betreiben.

Der Erfindung liegt die Aufgabe zugrunde, ein verbessertes System zum Transport von Containern, insbesondere ISO-Containern, mittels Schwerlastfahrzeugen bereit zu stellen, das besonders sicher und wirtschaftlich betrieben werden kann.

Diese Aufgabe wird durch ein System mit den Merkmalen des Anspruchs 1 gelöst. In den abhängigen Ansprüchen sind vorteilhafte Ausgestaltungen der Erfindung angegeben.

Ein System zum Transport von Containern mittels Schwerlastfahrzeugen, das mindestens ein automatisch geführtes Schwerlastfahrzeug und mindestens ein manuell geführtes Schwerlastfahrzeug sowie einen separaten Betriebsbereich umfasst, in dem das mindestens eine automatisch geführte Schwerlastfahrzeug und das mindestens eine manuell geführte Schwerlastfahrzeug gemeinsam in einem Mischverkehr betreibbar sind, wobei das System ein Flottenleitsystem umfasst, das eingerichtet ist, um den Mischverkehr der Schwerlastfahrzeuge in dem separaten Betriebsbereich durch kontinuierliche Verarbeitung der Positionen des automatisch geführten Schwerlastfahrzeugs sowie durch Vorgabe von Routen für das automatisch geführte Schwerlastfahrzeug zu koordinieren, wobei eine drahtlose Kommunikationsverbindung zwischen dem automatisch geführten Schwerlastfahrzeug und dem Flottenleitsystem vorgesehen ist, wobei das automatisch geführte Schwerlastfahrzeug, insbesondere dessen Fahrzeugsteuerung, mit einer Einrichtung zur automatischen Navigation und/oder mit einer Einrichtung zur Positionsbestimmung und/oder mit einem Sensor zur Objekterkennung versehen ist, wird dadurch verbessert, dass das Flottenleitsystem eingerichtet ist, um den Mischverkehr der Schwerlastfahrzeuge in dem separaten Betriebsbereich durch kontinuierliche Verarbeitung der Positionen sowohl des automatisch geführten Schwerlastfahrzeugs als auch des manuell geführten Schwerlastfahrzeugs sowie durch Vorgabe von Routen sowohl für das automatisch geführte Schwerlastfahrzeug als auch für das manuell geführte Schwerlastfahrzeug zu koordinieren, wobei innerhalb des separaten Betriebsbereichs das manuell geführte Schwerlastfahrzeug mit einem Fahrerinformationssystem versehen ist und das Fahrerinformationssystem mit dem Flottenleitsystem verbunden ist, um einem Fahrer des manuell geführten Schwerlastfahrzeugs Anweisungen für das manuelle Führen des Schwerlastfahrzeugs zu geben, und wobei die drahtlose Kommunikationsverbindung zwischen den Schwerlastfahrzeugen und dem Flottenleitsystem vorgesehen ist. Damit die Schwerlastfahrzeuge in dem separaten Betriebsbereich gemeinsam und insbesondere gleichzeitig in einem Mischverkehr betrieben werden können, hat der separate Betriebsbereich einen von den Schwerlastfahrzeugen gemeinsam befahrbaren und zumindest abschnittsweise barrierefreien Flurboden. Zumindest die barrierefreien Abschnitte sind prinzipiell sowohl von internen als auch von externen Schwerlastfahrzeugen erreichbar und befahrbar. Etwaige Fahrspuren sind dort barrierefrei, das heißt nicht durch etwaige Barrieren physikalisch beziehungsweise räumlich voneinander getrennt, nebeneinander und/oder sich kreuzend angeordnet. Dies gilt insbesondere außerhalb des jeweiligen Lagerbereichs und für dort an den Lagerbereich angrenzende Quergassen. Zumindest in den Kreuzungsbereichen kann somit im Rahmen des Mischverkehrs der separate Betriebsbereich koordiniert und insbesondere nacheinander sowohl von internen als auch von externen Schwerlastfahrzeugen befahren werden.

Hierbei ist vorzugsweise das automatisch geführte Schwerlastfahrzeug ein internes Schwerlastfahrzeug und das manuell geführte ein externes Schwerlastfahrzeug, so dass ein Mischverkehr aus voll-automatisierten innerbetrieblichen Schwerlastfahrzeugen und manuell geführten externen Schwerlastfahrzeugen möglich ist. Damit ist also insbesondere keine strikte und insbesondere durch entsprechende Barrieren erfolgende lückenlose räumliche Trennung automatisch geführter und manuell geführter Schwerlastfahrzeuge mehr erforderlich, so dass in dem separaten Betriebsbereich anders als im oben genannten Stand der Technik nicht mehr ausschließlich automatisch geführte Schwerlastfahrzeuge betrieben werden dürfen. Stattdessen können die automatisch geführten und manuell geführten Schwerlastfahrzeuge nun gemeinsam in einem Mischverkehr in dem separaten Betriebsbereich betrieben werden. Außerdem ist durch das erfindungsgemäße System auch ein sicherer innerbetrieblicher automatisierter Verkehr in Bereichen möglich, in denen es zu einem Mischverkehr von internen manuell oder automatisch geführten und externen manuell geführten Schwerlastfahrzeugen wie beispielsweise konventionellen Lkw kommt. Insbesondere ein Mischverkehr beziehungsweise gemischter Verkehr von internen automatisch geführten Schwerlastfahrzeugen mit externen manuell geführten Schwerlastfahrzeugen war aufgrund der strikten Trennung automatisch geführter Schwerlastfahrzeuge von manuell geführten Schwerlastfahrzeugen bisher nicht möglich. In vorteilhafter Weise kann somit der Automatisierungsgrad des so genannten Horizontalverkehrs entsprechender Schwerlastfahrzeuge sukzessive erhöht werden, was aufgrund reduzierter Personalkosten zu einer erhöhten Wirtschaftlichkeit führt.

Erfindungsgemäß ist vorgesehen, dass das System ein Flottenleitsystem umfasst, über das der Mischverkehr der Schwerlastfahrzeuge in dem separaten Betriebsbereich koordinierbar ist, durch kontinuierliche Verarbeitung der Positionen der Schwerlastfahrzeuge, Vorgabe von Routen für die Schwerlastfahrzeuge, und insbesondere durch Blockieren von Bereichen für die Schwerlastfahrzeuge etc.

In konstruktiv einfacher Weise ist vorgesehen, dass das Fahrerinformationssystem als mobiles Gerät ausgebildet ist, das an dem manuell geführten Schwerlastfahrzeug vor dessen Einfahrt in den Betriebsbereich angeordnet, vorzugsweise dem Fahrer übergeben, und innerhalb des Betriebsbereichs von dem Schwerlastfahrzeug mitgeführt wird.

Alternativ kann in vorteilhafter Weise vorgesehen sein, dass das Fahrerinformationssystem an dem manuell geführten Schwerlastfahrzeug fest installiert ist. Dies ist insbesondere vorteilhaft bei ausschließlich innerbetrieblich eingesetzten Schwerlastfahrzeugen, die den separaten Betriebsbereich nicht verlassen. Ein Verlust des Fahrerinformationssystems kann so zuverlässig vermieden werden.

Ein zuverlässiger und sicherer Betrieb wird außerdem in vorteilhafter Weise dadurch erreicht, dass das automatisch geführte Schwerlastfahrzeug, insbesondere dessen Fahrzeugsteuerung, mit einer Einrichtung zur automatischen Navigation und/oder mit einer Einrichtung zur Positionsbestimmung und/oder mit einem Sensor zur Objekterkennung versehen ist.

Die erfindungsgemäße drahtlose Kommunikationsverbindung kann beispielsweise als W-LAN-Verbindung oder LTE-Verbindung ausgebildet sein. Auch andere drahtlose Kommunikationsverbindungen sind selbstverständlich denkbar. Hierüber kann in einfacher Weise ein Austausch von Betriebsinformationen wie Transportaufträge, Routen und deren Änderungen, Position und Orientierung der Schwerlastfahrzeuge innerhalb des Betriebsbereichs, Anweisungen für die Fahrer, Sperrbereiche und weiteren in der unten stehenden Beschreibung genannten Betriebsinformationen erfolgen.

In vorteilhafter Weise kann vorgesehen sein, dass der separate Betriebsbereich Teil eines Containerterminals, RoRo-Terminals, Logistikzentrums oder Industriebetriebs ist. Hierbei kann vorteilhaft vorgesehen sein, dass in dem separaten Betriebsbereich zusätzlich ein Umschlaggerät für die normierten oder betriebsintern beziehungsweise betriebsübergreifend standardisierten Ladungsträger, insbesondere in Form einer Containerbrücke, eines Hafenkrans oder eines Stapelkrans eines Containerlagers, angeordnet ist und sowohl die automatisch geführten Schwerlastfahrzeuge als auch die manuell geführten Schwerlastfahrzeuge betreibbar sind, um für das Aufnehmen oder Abgeben eines Ladungsträgers zu dem Umschlaggerät hin oder hiervon weg zu fahren.

In vorteilhafter Weise ist zudem vorgesehen, dass in dem separaten Betriebsbereich mindestens eine erste Fahrspur für das automatisch geführte Schwerlastfahrzeug und mindestens eine zweite Fahrspur für das manuell geführte Schwerlastfahrzeug reserviert ist. Dies erleichtert das Koordinieren des Mischverkehrs und reduziert wie unten ausführlicher beschrieben die Berührungspunkte zwischen den unterschiedlichen Verkehren. Selbstverständlich können für die jeweiligen Schwerlastfahrzeuge auch mehrere Fahrspuren innerhalb einer Lagergasse vorgesehen sein, so dass die entsprechenden Schwerlastfahrzeuge sich überholen können. Benachbarte Fahrspuren können hierbei in der jeweiligen Lagergasse und in deren Kreuzungsbereichen insbesondere über Fahrbahnmarkierungen und/oder als schikaneartige Barriere dienende Leitelemente der unten beschriebenen Art zumindest abschnittsweise physikalisch voneinander getrennt sein.

Die Berührungspunkte können in vorteilhafter Weise weiter dadurch reduziert werden, dass die ersten und zweiten Fahrspuren jeweils durch einen Übergabebereich eines Umschlaggeräts eines Lagerbereichs geführt sind und hierbei jeweils seitlich an dem Lagerbereich angeordnet sind, vorzugsweise jeweils in einer von zwei gegenüberliegend an den Lagerbereich angrenzenden Lagergassen. Dadurch sind die ersten Fahrspuren für die automatisch geführten Schwerlastfahrzeuge von den zweiten Fahrspuren für die manuell geführten Schwerlastfahrzeuge innerhalb des separaten Betriebsbereichs auch durch den jeweiligen Lagerbereich physikalisch voneinander getrennt.

Eine sichere Koordinierung des Mischverkehrs ist dadurch möglich, dass die ersten und zweiten Fahrspuren sich in einem Kreuzungsbereich von zwei Lagergassen kreuzen, in dem vorzugsweise Fahrbahnmarkierungen und/oder Leitelemente so angeordnet sind, dass der Kreuzungsbereich als Überquerungskreuzung ausgebildet ist oder der Kreuzungsbereich als Abbiegekreuzung ausgebildet ist. Dadurch ist sichergestellt, dass von den unterschiedlichen Verkehren nur die jeweils hierfür festgelegten Wege gefahren werden können.

Hierbei kann als Verkehrsregel auch vorteilhaft vorgesehen sein, dass das manuell geführte Schwerlastfahrzeug im Betriebsbereich im Uhrzeigersinn und das automatisch geführte Schwerlastfahrzeug im Betriebsbereich entgegen des Uhrzeigersinns oder jeweils umgekehrt verkehrt. Diese Verkehrsregel gilt entsprechend für alle weiteren manuell beziehungsweise automatisch geführten Schwerlastfahrzeuge entsprechend. Alternativ kann auch vorgesehen sein, dass sämtliche manuell und automatisch geführten Schwerlastfahrzeuge gemeinsam in die gleiche Richtung, das heißt im oder entgegen des Uhrzeigersinns, fahren müssen. Durch entsprechend vorgeschriebene Fahrtrichtungen nach dem Einbahnstraßenprinzip und dem unten näher beschriebenen Umlaufbetrieb werden die Produktivität und auch die Sicherheit erhöht, da Staus vermieden oder zumindest minimiert werden können. Das erfindungsgemäße System ermöglicht durch seine im Rahmen dieser Anmeldung beschriebenen Bestandteile eine vorteilhafte Reduzierung und Minimierung von Sicherheitskomponenten wie beispielsweise Zäune, Ampeln, Zugangskontrollen. Diese Sicherheitskomponenten waren bisher erforderlich, um den nun möglichen Mischverkehr zu verhindern.

Ein Ausführungsbeispiel der Erfindung wird anhand der nachfolgenden Beschreibung näher erläutert. Es zeigen:
Figur 1 eine schematische Ansicht eines Containerterminals in der Draufsicht,
Figur 2 eine schematische funktionelle Darstellung eines Systems zur Realisierung eines Mischverkehrs aus manuell und automatisch geführten Schwerlastfahrzeugen in einem separaten Betriebsbereich,
Figur 3 eine weitere schematische Ansicht des Containerterminals in der Draufsicht,
Figur 4 eine ausschnittsweise schematische Ansicht des Containerterminals in einer Seitenansicht,
Figuren 5a bis 5c Ansichten eines ersten Kreuzungsbereichs von Lagergassen,
und Figuren 6a und 6b Ansichten eines zweiten Kreuzungsbereichs von Lagergassen.

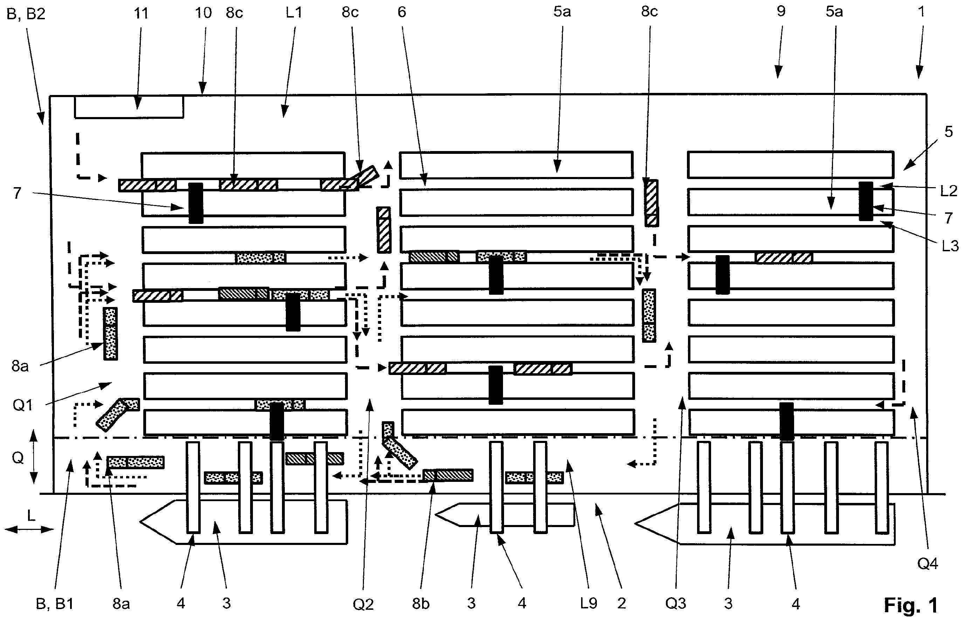

In der Figur 1 ist eine schematische Ansicht eines Containerterminals 1 in der Draufsicht gezeigt, das als Hafenterminal ausgebildet ist. Hierbei können an einem Kai 2 eines Hafens mehrere Schiffe 3 anlegen, um Container anzuliefern oder abzuholen. Für das Beladen beziehungsweise Löschen der Schiffe 3 sind an dem Kai 2 Containerbrücken 4 vorgesehen, die auch als Ship-to-Shore Cranes bezeichnet werden und deren Ausleger sich einerseits über die Schiffe 3 und andererseits über dem Kai 2 erstrecken. Alternativ kann das Beladen beziehungsweise Löschen der Schiffe 3 auch über so genannte Hafenkrane erfolgen, deren Ausleger hierbei um eine vertikale Achse über das entsprechende Schiff 3 verschwenkt wird. Sowohl die Containerbrücken 4 als auch die Hafenkrane stellen so genannte Umschlaggeräte dar.

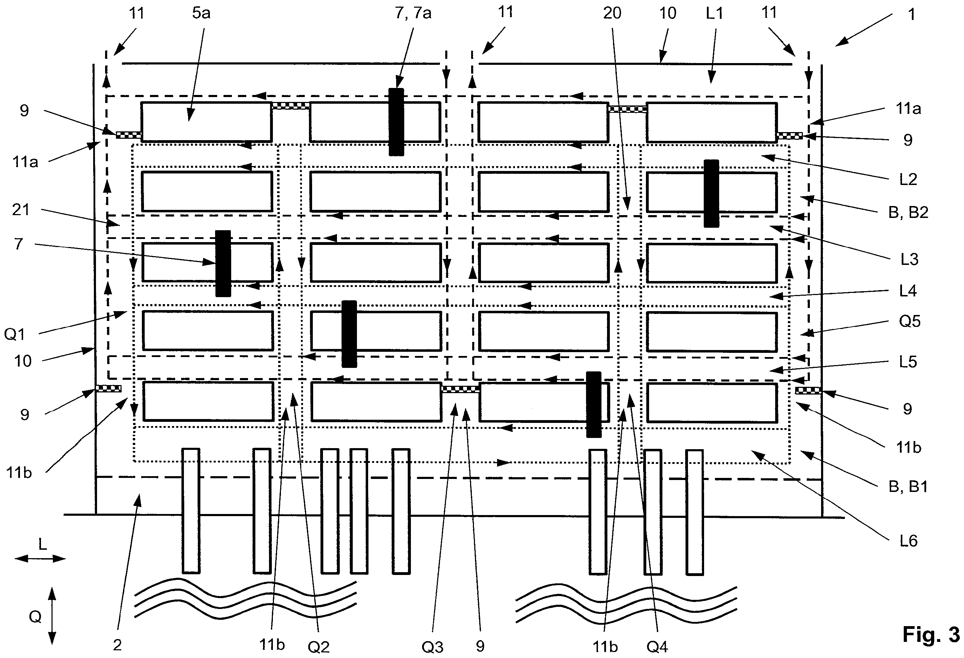

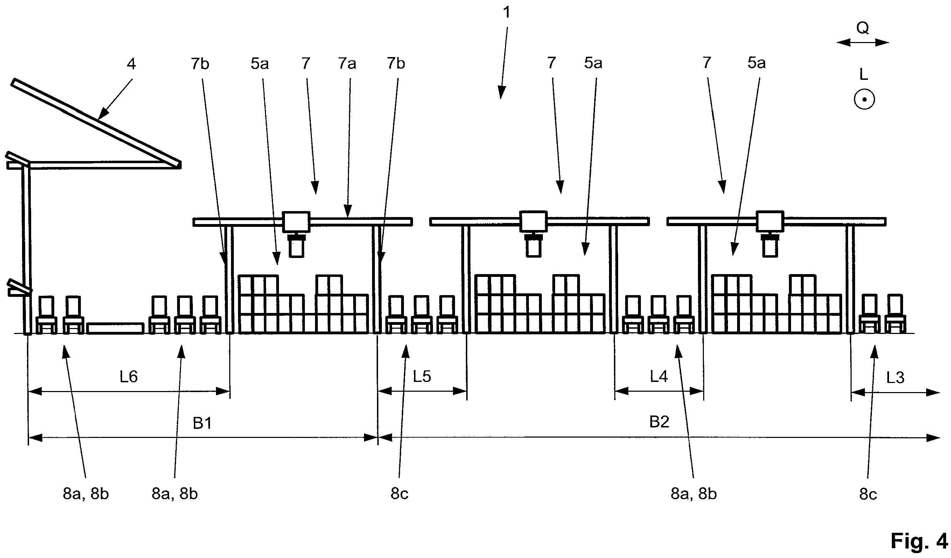

Das Containerterminal 1 ist von einer Begrenzung 10 umgeben und hierüber von seiner äußeren Umgebung und vom öffentlichen Verkehr außerhalb des Containerterminals 1 getrennt. Zudem umfasst das Containerterminal innerhalb der Begrenzung 10 ein Containerlager 5, in dem Container zur kurzzeitigen Zwischenlagerung in mindestens einem auch als Stack bezeichneten Lagerbereich 5a gestapelt werden können, nachdem sie von den Schiffen 3 abgeladen wurden und bevor sie für den weiteren Transport auf ein Straßen- oder Schienenfahrzeug geladen oder nachdem sie hiervon angeliefert wurden und bevor sie auf die Schiffe 3 geladen werden. Hierbei sind vorzugsweise mehrere Lagerbereiche 5a und mehrere Lagergassen vorgesehen, um den mindestens einen Lagerbereich 5a von der Begrenzung 10 oder bei mehreren Lagerbereichen 5a jeweils zwei benachbarte Lagerbereiche 5a voneinander sowie von der Begrenzung 10 des Containerterminals zu beabstanden. Dadurch ergibt sich eine regelmäßige rasterartige Anordnung der Lagerbereiche 5a. Die Lagergassen umfassen im Wesentlichen parallel zum Rand des Kais 2 in Längsrichtung L verlaufende Längsgassen L1 bis Ln, in Figur 1 neun Längsgassen L1 bis L9, und senkrecht zum Kai 2 in Querrichtung Q verlaufende Quergassen Q1 bis Qn, in Figur 1 vier Quergassen Q1 bis Q4. Die Quergassen Q1 bis Qn kreuzen die Längsgassen L1 bis Ln somit rechtwinklig, es sind aber auch andere Winkel zwischen den Lagergassen möglich. In den Lagerbereichen 5a sind die Container mit ihrer Längsseite parallel zur Längsrichtung L ausgerichtet. An jeder der vier Seiten jedes Lagerbereichs 5a grenzt eine Lagergasse in Form von zwei gegenüberliegenden Längsgassen und zwei gegenüberliegenden Quergassen an. Hierbei können in jedem Lagerbereich 5a mehrere, zum Beispiel zehn, Reihen von Containern mit ihren Längsseiten nebeneinander und je Reihe sechs Container oder auch mehr Container übereinander abgestellt werden. Zum Bewirtschaften des Containerlagers 5, das heißt zum Ein- und Auslagern der Container in dem Containerlager 5, ist für sämtliche der in Längsrichtung L benachbarten Lagerbereiche 5a mindestens ein Stapelkran 7 vorgesehen. Jeder Stapelkran 7 ist vorzugsweise als Portalkran ausgebildet, der einen oder zwei parallele und voneinander beabstandete Kranträger 7a aufweist. Die Kranträger 7a erstrecken sich in Querrichtung Q, überspannen jede Reihe des zugehörigen Lagerbereichs 5a und ragen beidseitig in Querrichtung Q über den zugehörigen Lagerbereich 5a oberhalb der angrenzenden Längsgassen hinaus, wodurch sie in der Draufsicht einen Teil der jeweiligen Längsgasse und der dortigen Fahrspuren überdecken (siehe Figur 3). Der oder die Kranträger 7a sind von vier vertikalen Stützen 7b (siehe Figur 4) getragen und bilden gemeinsam den portalförmigen Aufbau. Für das Ein- und Auslagern von Containern kann der Stapelkran 7 in Längsrichtung L entlang des zugehörigen Lagerbereichs 5a über die darin gestapelten Container hinweg und damit entlang der zugehörigen Längsgassen verfahren werden. In Querrichtung Q kann ein vom Kranträger 7a herabhängendes Lastaufnahmemittel, üblicherweise ein Spreaderrahmen, an den Stützen 7b vorbei, und zwischen diesen hindurch bewegt werden. Dadurch können in beiden der jeweils an den Lagerbereich 5a angrenzenden und sich gegenüberliegenden Längsgassen Container vom Stapelkran 7 aufgenommen oder abgeladen werden. Derartige Stapelkrane 7 stellen ebenfalls Umschlaggeräte dar und können beispielsweise als so genannte automatisierte Stapelkrane (Automated Stacking Crane - kurz: ASC), gummibereifte Stapelkrane (Rubber-Tyred Gantry Crane - kurz: RTG) oder schienengebundene Stapelkrane (Rail-Mounted Gantry Crane - kurz: RMG) ausgebildet sein. Dadurch kann ein Stapelkran 7 auch mehrere in Längsrichtung L benachbarte Lagerbereiche 5a, die in Längsrichtung L gesehen hintereinander angeordnet und jeweils durch eine Quergasse voneinander beabstandet sind, bewirtschaften und hierfür eine oder mehrere Quergassen überfahren. Alternativ kann jedem Lagerbereich 5a ein Stapelkran 7 zugeordnet sein. Anders als beim vorliegend dargestellten Layout des Containerterminals 1, ist auch ein um 90 Grad bezüglich des Kais 2 gedrehtes Layout denkbar, bei dem sich dementsprechend insbesondere die Lagerbereiche 5a und die Längsgassen nicht im Wesentlichen parallel, sondern quer und im Wesentlichen senkrecht zum Rand des Kais 2 erstrecken. Dies gilt insbesondere für wenn die Stapelkrane 7 als ASC ausgebildet sind.

In einem separaten Betriebsbereich B innerhalb des Containerterminals 1 erfolgt zum Transport von Containern ein gemeinsamer und gleichzeitiger Betrieb von mindestens einem internen automatisch geführten Schwerlastfahrzeug 8a und/oder mindestens einem internen manuell geführten Schwerlastfahrzeug 8b und/oder mindestens einem externen manuell geführten Schwerlastfahrzeug 8c. Wie nachfolgend ausführlicher beschrieben wird, ist in dem separaten Betriebsbereich B also ein sicherer Mischverkehr automatisch geführter und manuell geführter und/oder ein Mischverkehr interner und externer Schwerlastfahrzeuge 8a, 8b, 8c möglich. Mittels der internen automatisch beziehungsweise manuell geführten Schwerlastfahrzeuge 8a, 8b erfolgt ein Transport der Container zwischen dem Containerlager 5 beziehungsweise dessen Umschlaggeräten und den am Kai 2 angeordneten Umschlaggeräten. Mittels der externen manuell geführten Schwerlastfahrzeuge 8c können Container vom Containerlager 5 beziehungsweise dessen Stapelkran 7 für den weiteren Transport im öffentlichen Verkehr abgeholt oder nach einem Transport im öffentlichen Verkehr zur Zwischenlagerung im Containerlager 5 angeliefert werden. Diese Transporte erfolgen jeweils in einem so genannten Horizontalverkehr.

Sowohl die am Kai 2 als auch die im Containerlager 5 beziehungsweise den Lagerbereichen 5a angeordneten Umschlaggeräte können Container übergeben und damit die Schwerlastfahrzeuge 8a, 8b, 8c be- und entladen, wenn diese sich in entsprechenden Übergabebereichen unterhalb der Ausleger beziehungsweise Kranträger 7a des jeweiligen Umschlaggeräts befinden. Die Container können hierbei unmittelbar zwischen dem jeweiligen Schwerlastfahrzeug 8a, 8b, 8c und der Containerbrücke 4 beziehungsweise dem Schwerlastfahrzeug 8a, 8b, 8c und dem Stapelkran 7 des Containerlagers 5 übergeben werden. Wenn der Transport der Container im Horizontalverkehr mit Portalhubgeräten beziehungsweise Schwerlastfahrzeugen 8a, 8b mit Hubplattform erfolgt, können die Container zunächst in dem Übergabebereich auf dem Boden oder einem dort bereits abgestellten Container beziehungsweise Übergabegestellen abgestellt oder hiervon aufgenommen werden. Die Übergabebereiche stellen somit jeweils eine Schnittstelle zwischen dem Horizontalverkehr und einem Umschlaggerät dar.

Die internen Schwerlastfahrzeuge 8a, 8b können beispielsweise als Containertransportfahrzeuge, Terminal Trucks oder Portalhubgeräte im Sinne der obigen Definition ausgebildet sein. Prinzipiell kann die gesamte Flotte der Schwerlastfahrzeuge 8a, 8b in dem Containerterminal 1 nur einen der vorgenannten Fahrzeugtypen, also beispielsweise nur Terminal Trucks, oder auch mehrere verschiedene Fahrzeugtypen, also beispielsweise Terminal Trucks und Portalhubgeräte, umfassen. Diese Fahrzeugtypen sind nur für einen innerbetrieblichen Einsatz, das heißt für einen internen Betrieb innerhalb des Containerterminals 1 beziehungsweise in dessen separaten Betriebsbereich B, und nicht für einen externen Einsatz im öffentlichen Verkehr vorgesehen und ausgelegt beziehungsweise zugelassen. Derartige Schwerlastfahrzeuge 8a, 8b sind über Räder frei auf dem Kai 2 und damit flurgebunden, jedoch nicht schienengebunden verfahrbar. Dementsprechend sind die Schwerlastfahrzeuge 8a, 8b von Schienenfahrzeugen und insbesondere von Eisenbahnwagons zu unterscheiden. Die Räder der Schwerlastfahrzeuge 8a, 8b sind jeweils mit einer Bereifung versehen, die vorzugsweise eine mit Luft befüllte Gummibereifung im Sinne von Pneus ist. Außerdem umfassen die Schwerlastfahrzeuge 8a, 8b jeweils einen Fahrantrieb mit einem beispielsweise als Elektromotor oder Verbrennungsmotor ausgebildeten Motor und einem Getriebe, um hierüber die Räder anzutreiben.

Die externen Schwerlastfahrzeuge 8c sind im Sinne der obigen Definition üblicherweise als konventionelle Lkw ausgebildet, die für den öffentlichen Straßenverkehr zugelassen sind.

Der separate Betriebsbereich B ist innerhalb der Begrenzung 10 angeordnet und hierdurch ebenfalls vom öffentlichen Verkehr außerhalb des Containerterminals 1 getrennt. Die Begrenzung 10 kann sich bis zum Rand des Kais 2 erstrecken und beispielsweise als Zaun oder Mauer ausgebildet sein. Die Begrenzung 10 ist an einer oder mehreren Stellen unterbrochen, um dort einen oder mehrere externe Passierbereiche 11 für die externen manuell geführten Schwerlastfahrzeuge 8c zu bilden. Die Schwerlastfahrzeuge 8c können vom öffentlichen Verkehr außerhalb des Containerterminals 1 kommend nur durch die Passierbereiche 11 in das Containerterminal 1 und bereits hiermit (siehe Figur 1) oder erst anschließend (siehe Figur 3) durch einen weiteren externen Passierbereich 11a in den Betriebsbereich B hinein beziehungsweise von dort zurück aus dem Betriebsbereich B und in den öffentlichen Verkehr hinaus fahren. Zum gezielten Öffnen und Schließen jedes Passierbereichs 11, 11a kann auch jeweils eine Sicherheitsschleuse zum An- und Abmelden einschließlich einer Identifikation der ein- und ausfahrenden Schwerlastfahrzeuge 8c und deren Fahrer vorgesehen sein. Die internen Schwerlastfahrzeuge 8a, 8b, dürfen nicht durch die Passierbereiche 11, 11a fahren, da sie nicht in den öffentlichen Verkehr außerhalb des Containerterminals 1 gelangen dürfen und auch nicht den Betriebsbereich B verlassen dürfen. Die automatisch geführten Schwerlastfahrzeuge 8a können ohnehin nur innerhalb des Betriebsbereichs B bestimmungsgemäß betrieben werden. Hiervon ausgenommen ist ein Verlassen des Betriebsbereichs B beispielsweise für Wartungs- oder Reparaturzwecke. In diesem Fall verlassen die Schwerlastfahrzeuge 8a den Betriebsbereich B jedoch nicht automatisch geführt, so dass dies nicht als bestimmungsgemäßer Betrieb gilt. Anders als im oben genannten Stand der Technik können in dem separaten Betriebsbereich B zusätzlich zu den internen automatisch geführten Schwerlastfahrzeugen 8a gemeinsam beziehungsweise gleichzeitig mit diesen auch die internen und/oder externen manuell geführten Schwerlastfahrzeuge 8b, 8c betrieben werden.

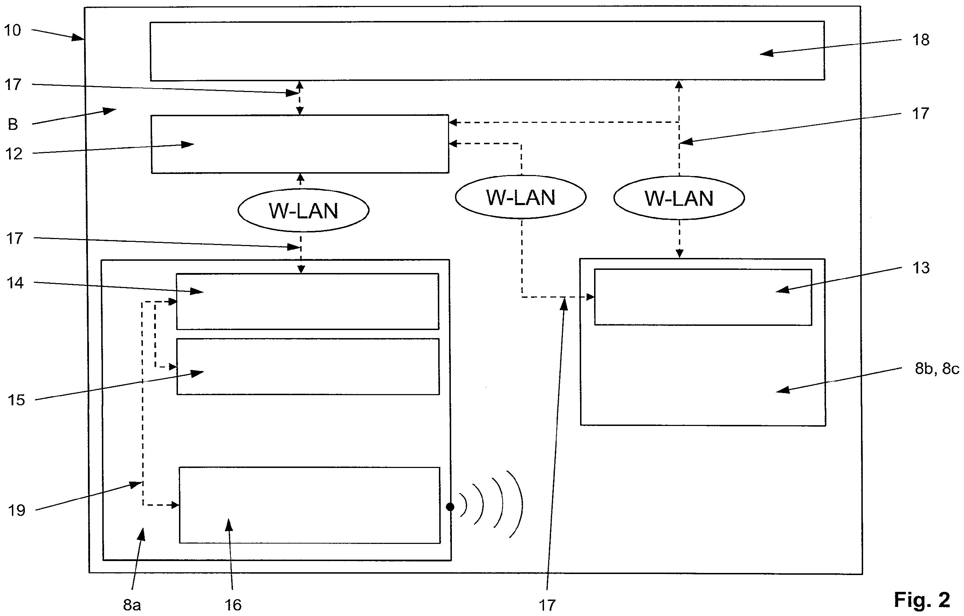

Die Figur 2 zeigt eine schematische funktionelle Darstellung eines Systems zur Realisierung eines Mischverkehrs aus manuell und automatisch geführten Schwerlastfahrzeugen 8a, 8b, 8c in dem separaten Betriebsbereich B. Erkennbar ist der separate Betriebsbereich B des Containerterminals 1. Für den Mischverkehr ist als modularer Funktionsbaustein des Systems ein Flottenleitsystem 12 vorgesehen, über das der gleichzeitig stattfindende Verkehr der internen und externen beziehungsweise automatisch und manuell geführten Schwerlastfahrzeuge 8a, 8b, 8c in dem separaten Betriebsbereich B und insbesondere in den Lagergassen koordiniert wird. Im Rahmen dessen erfolgt der nachfolgend beschriebene Austausch diverser Betriebsinformationen und es wird hierbei insbesondere eine Routenplanung und Routenüberwachung durchgeführt. Zu diesem Zweck sind zwischen den Schwerlastfahrzeugen 8a, 8b, 8c und dem Flottenleitsystem 12 drahtlose Kommunikationsverbindungen 17 im Sinne von Datenverbindungen, beispielsweise in Form von W-LAN-Verbindungen für den Austausch der Betriebsinformationen herstellbar. Zur Routenplanung und Routenüberwachung erfolgt durch das Flottenleitsystem 12 insbesondere eine kontinuierliche Verarbeitung der zeitlich veränderlichen Positionen aller im Betriebsbereich B befindlichen Schwerlastfahrzeuge 8a, 8b, 8c. Das Flottenleitsystem 12 kennt also wesentliche Betriebsinformationen zum Status, insbesondere der Position jedes Schwerlastfahrzeugs 8a, 8b, 8c in der entsprechenden Lagergasse beziehungsweise die jeweils genutzten Fahrbereiche, Fahrspuren und Fahrtrichtungen. Auch eine Vorgabe und Änderung von Routen für die Schwerlastfahrzeuge 8a, 8b, 8c kann hierbei über das Flottenleitsystem 12 und die Kommunikationsverbindungen 17 erfolgen, beispielsweise durch für bestimmte Zeitpunkte vorgegebene Zielpositionen zu nutzende Lagergassen, Fahrspuren und/oder Fahrtrichtungen. Zudem kann das Flottenleitsystem 12 dynamisch Bereiche, insbesondere einzelne Lagergassen beziehungsweise Fahrspuren, für alle im Betriebsbereich B befindlichen Schwerlastfahrzeuge 8a, 8b, 8c im Sinne von Sperrbereichen blockieren oder freigeben und somit sicherstellen, dass sich in einem vorgegebenen Bereich nur ein Schwerlastfahrzeug 8a, 8b, 8c befindet. Ferner kann das Flottenleitsystem 12 das Ein- und Ausfahren der Schwerlastfahrzeuge 8a, 8b, 8c in die oben erwähnten Übergabebereiche sowie Wartungsaufträge und im Fall batteriebetriebener Schwerlastfahrzeuge 8a, 8b auch gegebenenfalls erforderliche Batteriewechselaufträge beziehungsweise Batterieladeaufträge verwalten beziehungsweise koordinieren. Auch kann das Flottenleitsystem 12 eine so genannte Deadlock-Überwachung der automatisch geführten Schwerlastfahrzeuge 8a durchführen.

Innerhalb des separaten Betriebsbereichs B sind die manuell geführten Schwerlastfahrzeuge 8b, 8c mit einem weiteren modularen Funktionsbaustein in Form eines Fahrerinformationssystem 13 versehen, das auch als On-Board-Unit bezeichnet wird. Es kann vorgesehen sein, dass manuell geführte Schwerlastfahrzeuge 8b, 8c nur zusammen mit einem solchen Fahrerinformationssystem 13 in den separaten Betriebsbereich B einfahren dürfen. Nur dann kann jedes manuelle Schwerlastfahrzeug 8b, 8c in die Koordinierung des Mischverkehrs eingebunden und berücksichtigt werden. Dies erhöht die Produktivität und auch die Sicherheit des Containerterminals 1, da Staus vermieden oder zumindest minimiert werden können. Das Fahrerinformationssystem 13 kommuniziert hierbei zum Austausch von Betriebsinformationen mit dem Flottenleitsystem 12 jeweils über eine der drahtlosen Kommunikationsverbindungen 17. Im Rahmen dessen übermittelt das Flottenleitsystem 12 dem Fahrer des jeweiligen Schwerlastfahrzeugs 8b, 8c über das Fahrerinformationssystem 13 Betriebsinformationen insbesondere in Form von Anweisungen für das manuelle Führen des Schwerlastfahrzeugs 8b, 8c. Anweisungen können die oben bereits erläuterte Vorgaben einer Route zum Zielpunkt und deren Änderungen, vorzugsweise einschließlich zu nutzender Lagergassen, Fahrspuren, Fahrtrichtungen, aktuell eingerichteten Sperrbereichen, Fahrgeschwindigkeiten und Verkehrsregeln enthalten. Das Fahrerinformationssystem 13 ermittelt auch mögliche Abweichungen von den Anweisungen und informiert beziehungsweise warnt den Fahrer hierüber optisch und/oder akustisch. In diesem Zusammenhang ermittelt das Fahrerinformationssystem 13 vorzugsweise kontinuierlich und beispielsweise mittels einer GPS-Einheit die Position des Schwerlastfahrzeugs 8b, 8c und meldet diese auch an das Flottenleitsystem 12 zurück. Auch eine Information über die Betriebssituation im Betriebsbereich B kann über das Fahrerinformationssystem 13 erfolgen.

Das Fahrerinformationssystem 13 kann als mobiles Gerät ausgebildet sein, das vorzugsweise an jedem manuell geführten Schwerlastfahrzeug 8b, 8c spätestens vor dessen Einfahrt in den Betriebsbereich B angeordnet ist und innerhalb des Betriebsbereichs B von dem Schwerlastfahrzeug 8b, 8c mitgeführt wird. Das Fahrerinformationssystem 13 kann hierfür dem Fahrer bei Einfahrt in das Containerterminal 1 im Passierbereich 11 oder 11a übergeben und bei der Ausfahrt wieder abgegeben werden. Entsprechende mobile Geräte werden insbesondere für externe manuell geführte Schwerlastfahrzeuge 8c wie konventionelle Lkw eingesetzt. Bei rein innerbetrieblich eingesetzten Schwerlastfahrzeugen 8b kann das Fahrerinformationssystem 13 auch als mobiles Gerät ausgebildet sein oder an dem Schwerlastfahrzeug 8b fest installiert sein.

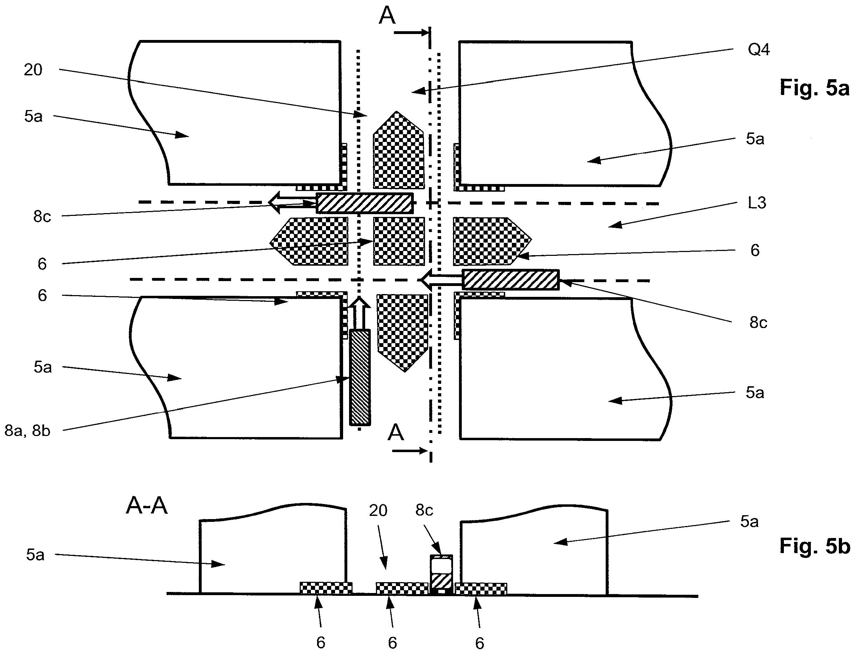

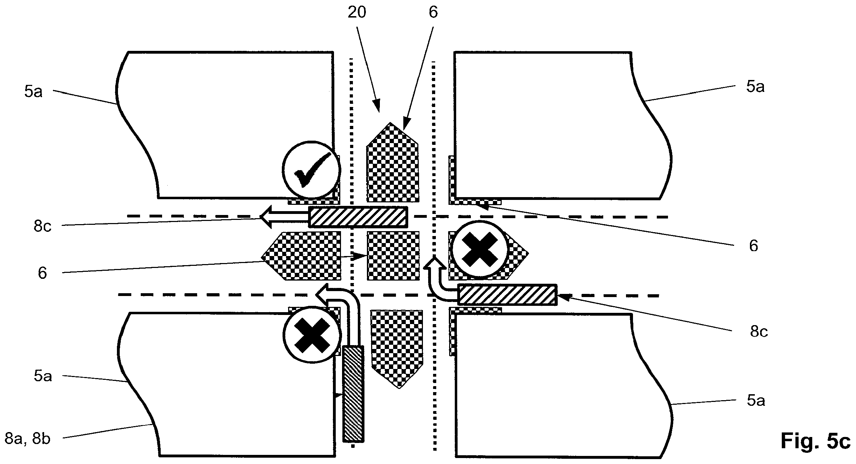

Die automatisch geführten Schwerlastfahrzeuge 8a, insbesondere deren Fahrzeugsteuerungen, sind jeweils mit einem weiteren modularen Funktionsbaustein in Form einer Einrichtung zur automatischen Navigation 14 innerhalb des Betriebsbereichs B versehen. Hierüber können die Schwerlastfahrzeuge 8a auf Basis der von dem Flottensystem 12 vorgegebenen Routen rechnergestützt navigieren und automatisch geführt werden. Um kontinuierlich die Position und Orientierung innerhalb des Betriebsbereichs B ermitteln und als Betriebsinformation über die entsprechende Kommunikationsverbindung 17 an das Flottenleitsystem 12 übermitteln zu können, ist jedes automatisch geführte Schwerlastfahrzeug 8a mit einem weiteren modularen Funktionsbaustein in Form einer Einrichtung zur Positionsbestimmung 15 versehen. Hierbei wird vorzugsweise Transpondertechnologie eingesetzt. Dementsprechend weisen die Einrichtungen zur Positionsbestimmung 15 mindestens eine Antenne auf, über die an vorbestimmten Stellen im Flurboden des Betriebsbereichs B eingelassene Transponder detektiert und hierüber die Position und Orientierung des Schwerlastfahrzeugs 8a ermittelt werden können. Auch andere Verfahren zur Ermittlung der Position und Orientierung können selbstverständlich eingesetzt werden, beispielsweise D-GPS/LPR. Die ermittelten Positionen und Orientierungen können auch steuerungstechnisch über eine entsprechende Datenleitung 19 an die Einrichtung zur automatischen Navigation 14 übermittelt werden und somit in Form eines Soll-Ist-Abgleichs beim automatischen Führen entlang der vorgegebenen und eventuell geänderten Routen berücksichtigt werden. Des Weiteren kann in diesem Zusammenhang zur Erhöhung der Sicherheit eine sensorische Objekterkennung erfolgen und zur Überwachung des Fahrwegs berücksichtigt werden. Hierfür sind die automatisch geführten Schwerlastfahrzeuge 8a jeweils mit einem Sensor zur Objekterkennung 16 als weiterem modularen Funktionsbaustein versehen, der steuerungstechnisch über die Datenleitung 19 und die Einrichtung zur automatischen Navigation 14 beziehungsweise die Einrichtung zur Positionsbestimmung 15 mit der Fahrzeugsteuerung wirkverbunden ist. Bei Detektion eines Hindernisses auf oder in einem vorbestimmten Abstand neben der Fahrspur wird in die Fahrzeugsteuerung eingegriffen, um eine Kollision zu verhindern. Hierbei kann das Schwerlastfahrzeug 8a automatisch abbremsen und/oder das detektierte Hindernis automatisch geführt umfahren. Das Hindernis kann auch ein anderes Schwerlastfahrzeug 8a, 8b, 8c sein, dass beispielsweise vorausfährt oder sich einem Kreuzungsbereich nähert, in dem eine Kollision droht (siehe Figur 5a). Das Flottenleitsystem 12 koordiniert die unterschiedlichen Verkehre jedoch so, dass im Regelfall interne und externe beziehungsweise automatisch und manuell geführte Schwerlastfahrzeuge 8a, 8b, 8c nicht zeitgleich in die Kreuzungsbereiche einfahren und aufeinander treffen können. Insbesondere durch die unten beschriebene Minimierung von Berührungspunkten zwischen den Verkehren muss in den Kreuzungsbereichen mittels der Objekterkennung 16 daher nur in Ausnahmefällen eingegriffen werden.

Das Flottenleitsystem 12 kann in ein Terminalleitsystem 18 eingebunden und somit Teil hiervon sein beziehungsweise hiermit für einen Austausch von Betriebsinformationen über eine drahtlose oder drahtgebundene Kommunikationsverbindung 17 in Verbindung stehen, um Betriebsinformationen austauschen zu können. Über das Terminalleitsystem 18 werden Transportaufträge für die Schwerlastfahrzeuge 8a, 8b geplant und dem Flottenleitsystem 12 über die Kommunikationsverbindung 17 übermittelt. Die Transportaufträge können dann von dem Flottenleitsystem 12 verwaltet und für die Koordinierung des gemischten Verkehrs aus automatisch geführten und manuell geführten Schwerlastfahrzeugen 8a, 8b, insbesondere die hierbei erfolgende Routenplanung und Routenüberwachung, verwendet werden. Aus den Transportaufträgen werden anschließend von dem Flottenleitsystem 12 Routen generiert und über die drahtlosen Kommunikationsverbindungen 17 an die Schwerlastfahrzeuge 8a, 8b übermittelt. Zudem kann das Terminalleitsystem 18 Transportaufträge auch direkt über eine weitere drahtlose Kommunikationsverbindung 17, beispielsweise in Form einer W-LAN-Verbindung, an die manuell geführten Schwerlastfahrzeuge 8b beziehungsweise dessen Fahrerinformationssystem 13 übermitteln. Über die Kommunikationsverbindung 17 mit dem Flottenleitsystem 12 kann dann auf Basis der Transportaufträge ebenfalls eine koordinierte Einbindung der entsprechenden Schwerlastfahrzeuge 8b in den gemischten Verkehr erfolgen, indem das Flottenleitsystem 12 dem Fahrer des jeweiligen Schwerlastfahrzeugs 8b über das Fahrerinformationssystem 13 entsprechende Anweisungen für das manuelle Führen des Schwerlastfahrzeugs 8b übermittelt. Auch die Lagerhaltung beziehungsweise Verwaltung des Containerlagers 5 kann über das Terminalleitsystem 18 erfolgen und in die Planung der Transportaufträge einfließen.

Die Figur 3 zeigt eine weitere schematische Ansicht des Containerterminals 1 in der Draufsicht. Dargestellt sind sechs Längsgassen L1 bis L6 und fünf Quergassen Q1 bis Q5, über die die Lagerbereiche 5a voneinander sowie von der Begrenzung 10 und den am Kai 2 angeordneten Umschlaggeräten beabstandet sind. Jede Lagergasse umfasst mindestens eine Fahrspur für die Schwerlastfahrzeuge 8a, 8b, 8c. Zur besseren Übersichtlichkeit sind in Figur 3 jedoch keine Schwerlastfahrzeuge 8a, 8b, 8c, sondern die hierfür vorgesehen Fahrspuren schematisch als mit Pfeilen versehene Linien dargestellt. Mit gepunkteten Linien sind Fahrspuren dargestellt, die für interne Schwerlastfahrzeuge 8a, 8b reserviert sind und mit gestrichelten Linien Fahrspuren, die für externe Schwerlastfahrzeuge 8c reserviert sind. Erkennbar ist, dass die Lagergassen in abwechselnder Reihenfolge nur für bestimmte der Schwerlastfahrzeuge 8a, 8b, 8c reserviert beziehungsweise vorbehalten sind und von den entsprechend anderen der Schwerlastfahrzeuge 8a, 8b, 8c nur in einigen Kreuzungsbereichen 20, 21 zweier Lagergassen zum Überqueren befahren werden dürfen. Nur in den äußeren Quergassen Q1 und Q5 sind die ansonsten gassenweise getrennten Fahrspuren entsprechender Schwerlastfahrzeuge 8a, 8b, 8c gemeinsam und mit entgegengesetzter Fahrtrichtung vorgesehen.

Innerhalb des Containerterminals 1 und der Begrenzung 10 kann der separate Betriebsbereich B zumindest teilweise auch von weiteren Begrenzungselementen 9 begrenzt sein, die nicht mit der Begrenzung 10 zusammenfallen und den Betriebsbereich B gegenüber der äußeren Begrenzung 10 weiter begrenzen. Die weiteren Begrenzungselemente 9 des Betriebsbereichs B können auch als Zaun oder Mauer ausgebildet sein. Im vorliegenden Beispiel ist zwischen den ersten beiden Längsgassen L1 und L2 und in den äußeren Quergassen Q1, Q2, Q4 und Q5 jeweils ein Begrenzungselement 9 vorgesehen. Die äußersten Begrenzungselemente 9 in den Quergassen Q1 und Q5 dienen als Barriere für die von den Schwerlastfahrzeugen 8a genutzten Fahrspuren und verhindern deren Ausfahrt aus dem Betriebsbereich, bilden jedoch jeweils einen Passierbereich 11a für die Schwerlastfahrzeuge 8c aus. Die inneren beiden Begrenzungselemente 9 begrenzen den Betriebsbereich B zwischen den entsprechenden Lagerbereichen 5a in den Quergassen Q2 und Q4. Auch die Lagerbereiche 5a selbst begrenzen zwischen den ersten beiden Längsgassen L1 und L2 den Betriebsbereich B. In der dritten Quergasse Q3 ist zwischen den Längsgassen L1 und L2 von den angrenzenden Lagerbereichen 5a ein weiterer Passierbereich 11a ausgebildet, durch den Schwerlastfahrzeuge 8c in den Betriebsbereich B ein- und ausfahren können. Hierfür sind in der Quergasse Q3 entsprechende Fahrspuren mit entgegengesetzten Fahrtrichtungen vorgesehen.

Der separate Betriebsbereich B kann einen ersten Bereich B1 im Sinne eines internen Bereichs und einen hieran angrenzenden zweiten Bereich B2 im Sinne eines Mischbereichs umfassen (siehe auch Figuren 1 und 4). In dem internen ersten Bereich B1 ist kein Mischverkehr, sondern ausschließlich innerbetrieblicher Verkehr zugelassen. Dementsprechend dürfen in den ersten Bereich B1 nur interne Schwerlastfahrzeuge 8a und/oder 8b wie beispielsweise die in Figur 1 schematisch dargestellten Terminal Trucks ein- und ausfahren. Externe manuell geführte Schwerlastfahrzeuge 8c wie konventionelle Lkw sind aus diesem internen Bereich B1 ausgeschlossen, dürfen jedoch in dem zweiten Bereich B2 verkehren. Zur Abgrenzung des ersten Bereichs B1 gegenüber dem zweiten Bereich B2 können analog zu den oben genannten Begrenzungselementen 9 weitere Begrenzungselemente 9 vorgesehen sein, die jeweils einen internen Passierbereich 11b mit oder ohne Sicherheitsschleuse bilden. Über jeden Passierbereich 11b ist der erste Bereich B1 mit dem zweiten Bereich B2 verbunden, wobei jedoch nur eine Durchfahrt von internen Schwerlastfahrzeugen 8a, 8b zugelassen wird. Die zwischen den Längsgassen L5 und L6 in der Quergasse Q1 und Q5 jeweils installierten Begrenzungselemente 9 dienen somit als Barriere für die von den Schwerlastfahrzeugen 8c genutzten Fahrspuren. Das innere Begrenzungselement 9 begrenzt den Betriebsbereich B zwischen den entsprechenden Lagerbereichen 5a in der Quergasse Q3. In den Quergassen Q2 und Q4 ist jeweils zwischen den Längsgassen L5 und L6 von den angrenzenden Lagerbereichen 5a ein weiterer Passierbereich 11b ausgebildet, durch den nur interne Schwerlastfahrzeuge 8a, 8b, vorzugsweise nur Schwerlastfahrzeuge 8a in den Betriebsbereich B ein- und ausfahren können. Hierfür sind in den Quergassen Q2 und Q4 jeweils entsprechende Fahrspuren mit entgegengesetzten Fahrtrichtungen vorgesehen.

Alternativ oder zusätzlich zu entsprechenden Begrenzungselementen 9 beziehungsweise Barrieren kann das Einfahren von Schwerlastfahrzeugen 8c und/oder 8b in den ersten Bereich B1 beziehungsweise das Verlassen des Betriebsbereichs B von Schwerlastfahrzeugen 8a und/oder 8b auch dadurch verhindert werden, dass die über das Flottenleitsystem 12 vorgegebenen Routen nur außerhalb des ersten Bereichs B1, insbesondere nur im zweiten Bereich B2, verlaufen. Hierfür kann der interne erste Bereich B1 von dem Flottenleitsystem 12 als Sperrbereich definiert und als solcher bei der Routenplanung und Routenüberwachung berücksichtigt und damit für die Schwerlastfahrzeuge 8c und/oder 8b ausgeschlossen werden. Der erste Bereich B1 kann also auch als reiner Automatik-Bereich betrieben werden, in dem nur Schwerlastfahrzeuge 8a verkehren dürfen.

Der interne erste Bereich B1 erstreckt sich vorzugsweise auf einer dem Kai 2 zugewandten wasserseitigen Seite des Containerlagers 5 und umfasst die Containerbrücken 4 sowie die zumindest die unmittelbar an den Kai 2 angrenzenden Lagerbereiche 5a sowie die Längsgasse L6. Der als Mischbereich dienende zweite Bereich B2 umfasst die übrigen Lagerbereiche 5a des Containerlagers 5, so dass in dessen Lagergassen unter Berücksichtigung der unten näher beschriebenen Vorgaben sowohl interne Schwerlastfahrzeuge 8a, 8b als auch externe Schwerlastfahrzeuge 8c verkehren dürfen. Nur die externen Schwerlastfahrzeuge 8c dürfen den Betriebsbereich B und das Containerterminal 1 durch die Passierbereiche 11, 11a verlassen.

Durch das bereits erwähnte Reservieren beziehungsweise Vorgeben von Fahrspuren beziehungsweise Lagergassen für Verkehre bestimmter Schwerlastfahrzeuge 8a, 8b, 8c werden zugleich je Lagerbereich 5a und zugehörigem Stapelkran 7 die beiden Übergabebereiche des Stapelkrans 7 für entsprechenden Verkehr reserviert. Die Fahrspuren sind also seitlich an den Lagerbereichen 5a angeordnet und grenzen also zumindest innerhalb der Übergabebereiche an den entsprechenden Stapelkran 7 an. Dadurch können die beispielsweise als so genannte Doppel-Cantilever-RMGs ausgebildeten Stapelkrane 7 Container auf beiden Seiten, insbesondere Längsseiten, eines Lagerbereichs 5a in den dort angrenzenden Lagergassen und somit wahlweise an ein internes gegebenenfalls automatisch geführtes Schwerlastfahrzeug 8a, 8b oder externes Schwerlastfahrzeug 8c übergeben oder aufnehmen. Dies wird auch in Figur 4 deutlich, die eine ausschnittsweise schematische Ansicht des Containerterminals 1 in einer Seitenansicht zeigt. Während in Figur 3 zur besseren Übersichtlichkeit exemplarisch nicht mehr als zwei Fahrspuren je Lagergasse dargestellt sind, können in den Längsgassen auch mehr Fahrspuren vorgesehen sein. Dies ist in Figur 4 beispielhaft für die Längsgassen L5 und L4 gezeigt, die jeweils drei Fahrspuren aufweisen. Hiervon stellt die mittlere Fahrspur jeweils eine Art Bypass-Fahrspur dar, die anders als die übrigen Fahrspuren nicht durch den Übergabebereich der Stapelkrane 7 unterhalb der Kranträger 7a geführt ist. Die Bypass-Fahrspur kann daher für ein Überholen von Schwerlastfahrzeugen 8a, 8b, 8c genutzt werden, die sich zum Be- oder Entladen im Übergabebereich befinden. Die sich auf dem Kai 2 erstreckende Längsgasse 6 umfasst im vorliegenden Beispiel neben einer durch den Übergabebereich des zugehörigen Stapelkrans 7 geführten Fahrspuren insgesamt vier weitere Fahrspuren, von denen zumindest einige durch den Übergabebereich der Containerbrücken 4 geführt sind.

Die in Figur 3 beispielhaft dargestellte Reservierung sieht vor, dass die Lagergassen beziehungsweise die darin verlaufenden Fahrspuren zwischen den Lagerbereichen 5a wie folgt genutzt werden: Längsgassen L1, L3, L5 für externe Schwerlastfahrzeuge 8c, Längsgassen L2, L4, L6 für interne Schwerlastfahrzeuge 8a, 8b, Quergassen Q1 und Q5 gemeinsam für Schwerlastfahrzeuge 8a, 8b, 8c mit entgegengesetzter Fahrtrichtung für internen und externen Verkehr, Quergassen Q2 und Q4 für interne Schwerlastfahrzeuge 8a, 8c, Quergasse Q3 für externe Schwerlastfahrzeuge 8c. Ein Mischverkehr von automatisch geführten und manuell geführten beziehungsweise internen und externen Schwerlastfahrzeugen 8a, 8b, 8c kommt damit wie in Figur 3 erkennbar nur im zweiten Bereich B2 und dort insbesondere in den äußeren Quergassen Q1 und Q5 sowie in einigen, vorliegend jedem zweiten, Kreuzungsbereichen von Quergassen und Längsgassen vor, nicht jedoch innerhalb einer Längsgasse zwischen den Kreuzungsbereichen.

Wie durch die Orientierung der Pfeile der entsprechenden Linien für die Fahrspuren in Figur 3 dargestellt, sind für die unterschiedlichen Verkehre Fahrtrichtungen vorgegeben. Im vorliegenden Beispiel ist für die externen Schwerlastfahrzeuge 8c vorgesehen, dass diese in einer Art Umlaufbetrieb um Lagerbereiche 5a herum und hierbei im Uhrzeigersinn verkehren und dementsprechend in ihren Fahrspuren in den Betriebsbereich B ein- und ausfahren. Die internen Schwerlastfahrzeuge 8a, 8b verkehren im Betriebsbereich B in einem entsprechenden Umlaufbetrieb entgegen des Uhrzeigersinns. Sämtliche durch die Längsgassen L1 bis L5 verlaufenden Fahrspuren weisen dieselbe Fahrtrichtung im Sinne von Einbahnstraßen auf. Lediglich in der Längsgasse L6 ist ein Umlaufbetrieb mit entgegensetzen Fahrtrichtungen möglich. Weiterhin werden die in den einzelnen Lagergassen zu befahrenden Fahrspuren vorgegeben. Für die inneren Quergassen Q2 bis Q4 kann beispielsweise für die internen Schwerlastfahrzeuge 8a, 8b Linksverkehr und für die externen Schwerlastfahrzeuge Rechtsverkehr vorgeschrieben sein.

Durch die zuvor genannten Vorgaben, die auch vom Flottenleitsystem 12 bei der oben beschriebenen Vorgabe und Änderung von Routen berücksichtigt werden, werden die Berührungspunkte zwischen den unterschiedlichen Verkehren (intern/extern beziehungsweise automatisch/manuell) auf ein Minimum reduziert. Berührungspunkte ergeben sich jedoch in Kreuzungsbereichen zwischen den Verkehren, in denen die jeweiligen Verkehre vorgegebene definierte Wege nehmen. Damit genau diese Wege gefahren werden, können in den Kreuzungsbereichen entsprechende Fahrbahnmarkierungen vorgesehen werden. Alternativ oder zusätzlich werden die Fahrspuren jedoch mit Leitelementen 6 in Form von schikaneartigen Einbauten versehen, so dass nur die vorgesehenen Wege möglich sind (in Figur 3 zur besseren Übersichtlichkeit nicht dargestellt).

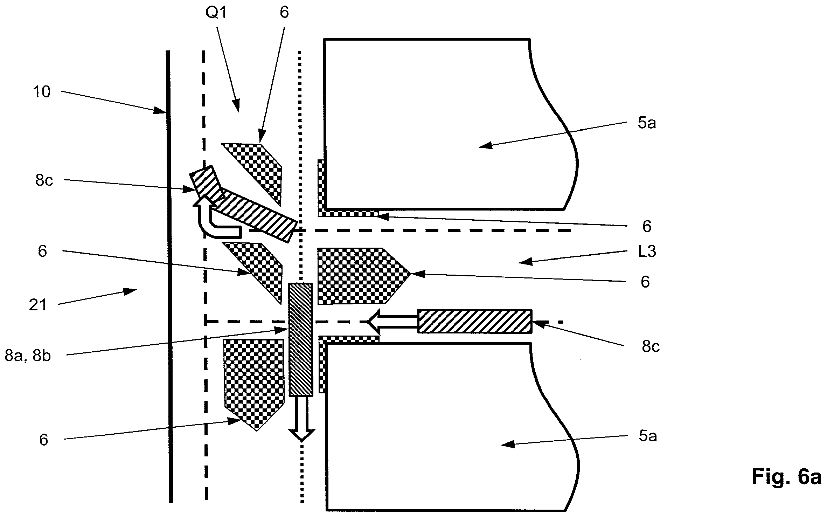

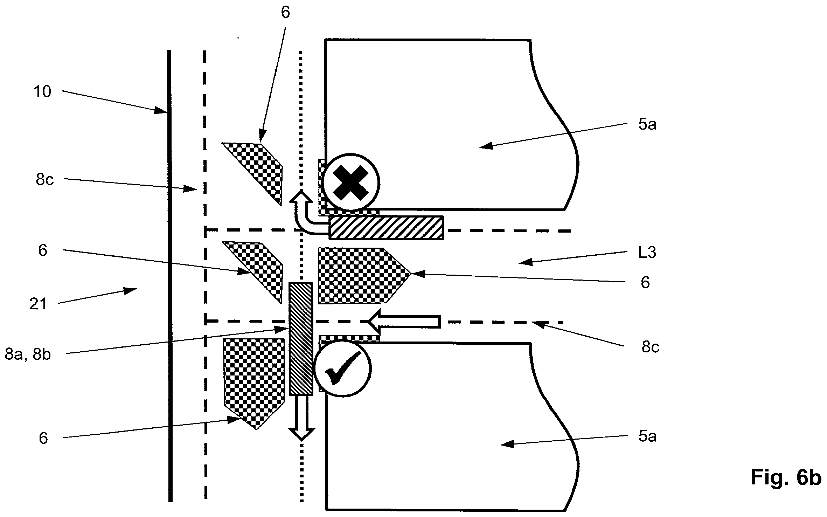

Beispielhaft wird dies nachfolgend anhand eines in den Figuren 5a bis 5c gezeigten ersten Kreuzungsbereichs 20 zwischen der Längsgasse L3 und der Quergasse Q4 und anhand eines in den Figuren 6a und 6b gezeigten zweiten Kreuzungsbereichs 21 zwischen der Längsgasse L3 und der Quergasse Q1 erläutert. Aus der Figur 3 ist ersichtlich, dass weitere identisch ausgebildete Kreuzungsbereiche vorhanden sind, für die die Ausführungen zu den Kreuzungsbereichen 20, 21 entsprechend gelten.

Der erste Kreuzungsbereich 20 ist als reine Überquerungskreuzung vorgesehen, bei der kein Abbiegen in die jeweils kreuzende Lagergasse beziehungsweise Fahrspur erlaubt ist. Um ein Abbiegen zuverlässig zu unterbinden, sind im Kreuzungsbereich 20 mehrere Leitelemente 6 installiert, die sich ausgehend von der Fahrbahn nach oben erstrecken und dadurch ihre schikaneartige Funktion erhalten, die in den Kreuzungsbereich 20 einfahrende Schwerlastfahrzeuge 8a, 8b, 8c in die gewünschte Fahrspur und Fahrtrichtung zwingt (siehe Querschnittsansicht A-A in Figur 5b). Hierfür sind die Leitelemente 6 so bemessen und zueinander angeordnet, dass die Lagergassen im Kreuzungsbereich gezielt so verengt werden, dass ein Abbiegen nicht möglich ist, sondern für einen kollisionsfreien Betrieb ein Überqueren der kreuzenden Lagergasse beziehungsweise Fahrspuren erfolgen muss. Hierbei ist sowohl zwischen den benachbarten Fahrspuren jeder Lagergasse ein entsprechendes äußeres Leitelement 6 vorgesehen, das sich in Richtung der kreuzenden Fahrspur gesehen zum Lagerbereich 5a hin erweitert und somit die angrenzenden Fahrspuren verengt. Zudem können auch in den Eckbereichen der an den Kreuzungsbereich 20 angrenzenden Lagerbereiche 5a weitere Leitelemente 6 beispielsweise in Winkelform installiert werden. Auch ist im Kreuzungsbereich 20 mittig zwischen den sich kreuzenden Fahrspuren vorgesehen ein zentrales Leitelement 6, das zusammen mit den jeweils benachbarten äußeren Leitelementen 6 die Fahrspuren zwischen den Lagerbereichen 5a entsprechend verengt. Damit sind alle in den Kreuzungsbereich 20 einfahrenden Schwerlastfahrzeuge 8a, 8b, 8c gezwungen diesen ohne Abbiegen in eine kreuzende Lagergasse beziehungsweise Fahrspur zu überqueren und somit die Fahrt in der jeweiligen Lagergasse fortzusetzen.

Der in den Figuren 6a und 6b gezeigte zweite Kreuzungsbereich 21 ist demgegenüber als Abbiegekreuzung, insbesondere in Form einer am Ende der Längsgassen vorgesehenen T-Kreuzung, vorgesehen. Dort ist für bestimmte Fahrspuren und Fahrtrichtungen ein Abbiegen in eine vorgegebene von mehreren kreuzenden Fahrspuren der kreuzenden Lagergasse möglich und erforderlich. Vorliegend können aus der Längsgasse L3 ausfahrende Schwerlastfahrzeuge 8c entsprechend des vorgesehenen Umlaufbetriebs nur im Uhrzeigersinn und nur in die in der Quergasse Q1 für Schwerlastfahrzeuge 8c reservierte äußere und von den Lagerbereichen 5a weiter beabstandete Fahrspur abbiegen. Daher sind im Kreuzungsbereich 21 mit den Leitelementen 6 des Kreuzungsbereichs 20 vergleichbare Leitelemente 6 installiert. Die Leitelemente 6 sind hier jedoch so bemessen und zueinander angeordnet, dass die Lagergassen im Kreuzungsbereich 21 gezielt so verengt werden, dass aus der Längsgasse L3 kommend ein Abbiegen in die innere Fahrspur der Quergasse Q1 nicht möglich ist, sondern für einen kollisionsfreien Betrieb ein Überqueren dieser Fahrspuren erfolgen muss und erst anschließend in die äußere Fahrspur abgebogen werden. Von der inneren Fahrspur der Quergasse Q1, die für Schwerlastfahrzeuge 8a und 8b reserviert ist, ist durch die gezeigte Anordnung der Leitelemente 6 im Kreuzungsbereich 21 nur ein Überqueren der kreuzenden Längsgasse L3 möglich. Dies gilt auch für auf der äußeren Fahrspur in den Kreuzungsbereich 21 einfahrende Schwerlastfahrzeuge 8c, die nicht entgegen des Uhrzeigersinns in die Längsgasse L3 abbiegen dürfen. Entsprechendes kann für einen analog ausgebildeten Kreuzungsbereich am anderen Ende der Längsgasse L3 hinsichtlich des Einfahrens in die Längsgasse L3 aus der Quergasse Q5 gelten.

Auch die Kreuzungsbereiche gleicher Verkehre können analog und insbesondere unter Verwendung entsprechender Leitelemente 6 als Überquerungskreuzung (beispielsweise Kreuzungen zwischen L4 und Q2 sowie L3 und Q3) oder Abbiegekreuzung (beispielsweise Kreuzungen zwischen L4 und Q1, L2 und Q2 oder L5 und Q3) ausgestaltet werden.

In Figur 3 ist zudem erkennbar, dass die bereits erwähnten Begrenzungselemente 9 analog zu den Leitelementen 6 die Funktion schikaneartiger Einbauten übernehmen und dementsprechend so in der jeweiligen Lagergasse als Teil von Kreuzungsbereichen angeordnet sind, dass gezielt eine gewünschte Fahrspur blockiert wird, um eine Geradeausfahrt zu unterbinden und ein Abbiegen in eine vorgegebene Lagergasse und gegebenenfalls Fahrspur zu erzwingen.

Durch die vorbeschriebene Reduzierung beziehungsweise Minimierung von Kreuzungsbereichen unterschiedlicher Verkehre wird die Automatisierung des internen Verkehrs wesentlichen erleichtert. In Vorbereitung auf einen Mischverkehr aus Schwerlastfahrzeugen 8a und 8c können zunächst auch nur manuell geführte Schwerlastfahrzeuge 8b und 8c eingesetzt und mit Hilfe der vorliegenden Erfindung koordiniert in einem entsprechenden Mischverkehr betrieben werden. Diese können dann jeweils die entsprechend reservierten Fahrspuren nutzen und die Schwerlastfahrzeuge 8b können anschließend unter Verwendung der vorliegend beschriebenen Erfindung durch Schwerlastfahrzeuge 8a ersetzt werden. Die Flotte interner Schwerlastfahrzeuge kann so vollständig automatisiert werden. Es können aber auch weiterhin interne und externe manuell geführte Schwerlastfahrzeuge gemeinsam eingesetzt werden. Auch kann ein bereits vollautomatischer Betriebsbereich B durch die vorliegende Erfindung für externe Schwerlastfahrzeuge 8c geöffnet und zu einem entsprechenden Mischverkehr von Schwerlastfahrzeugen 8a und 8c erweitert werden.

Auch ist es möglich, dass alternativ oder zusätzlich zu den als Terminal Trucks ausgebildeten Schwerlastfahrzeugen 8a, 8b Portalhubgeräte nach Art von Straddle Carriern eingesetzt werden, mit denen sowohl das Ein- und Auslagern von Containern in Lagerbereichen 5a des Containerlagers 5 als auch der Transport zwischen dem Containerlager 5 und den Containerbrücken 4 erfolgen kann. Außerdem können Schwerlaststapler nach Art so genannter Reach Stacker insbesondere als manuell geführte Schwerlastfahrzeuge 8b beziehungsweise Umschlaggerät eingesetzt werden. Sowohl entsprechende Portalhubgeräte als auch Schwerlaststapler weisen üblicherweise einen so genannten Spreader als Lastaufnahmemittel zur Aufnahme von Containern auf. Auf Stapelkrane 7 kann dann zumindest in einigen Lagerbereichen 5a des Containerlagers 5 verzichtet werden.

Die vorgenannten modularen Funktionsbausteine können prinzipiell für sämtliche der oben genannten möglichen Fahrzeugtypen von Schwerlastfahrzeugen 8a, 8b, 8c aber auch für Umschlaggeräte wie die genannten Krane, Portalhubgeräte und Schwerlaststapler verwendet werden. Das erfindungsgemäße System kann außerdem mit entsprechenden Schwerlastfahrzeugen 8a, 8b, 8c nicht nur wie vorliegend beschrieben in Bezug auf ein als Hafenterminal ausgebildetes Containerterminal 1 eingesetzt werden. Dies ist vielmehr auch möglich, wenn ein entsprechender separater Betriebsbereich B Teil eines RoRo-Terminals für so genannte RoRo-Schiffe (Abkürzung für Roll on Roll off-Schiffe, bei denen die Container mittels entsprechender Schwerlastfahrzeuge auf das Schiff beziehungsweise hiervon herunter gefahren werden), Logistikzentrums oder eines Industriebetriebs ist, in dem Container angeliefert oder abgeholt werden und hierbei sowohl interne automatisch geführte Schwerlastfahrzeuge 8a als auch gemeinsam hiermit interne und/oder externe manuell geführte Schwerlastfahrzeuge 8b, 8c in einem entsprechenden Mischverkehr eingesetzt werden sollen. Selbstverständlich können anstelle von Containern, insbesondere ISO-Containern, auch andere normierte oder standardisierte Ladungsträger wie beispielsweise Wechselaufbauten, insbesondere Wechselbehälter oder Wechselbrücken, transportiert und umgeschlagen werden.

### Bezugszeichenliste

- 1: Containerterminal
- 2: Kai
- 3: Schiff
- 4: Containerbrücke
- 5: Containerlager
- 5a: Stapel
- 6: Leitelement
- 7: Stapelkran
- 7a: Kranträger
- 7b: Stütze
- 8a: internes automatisch geführtes Schwerlastfahrzeug
- 8b: internes manuell geführtes Schwerlastfahrzeug
- 8c: externes manuell geführtes Schwerlastfahrzeug
- 9: Begrenzungselement
- 10: Begrenzung
- 11: externer Passierbereich
- 11a: weiterer externer Passierbereich
- 11b: interner Passierbereich
- 12: Flottenleitsystem
- 13: Fahrerinformationssystem
- 14: Einrichtung zur automatischen Navigation
- 15: Einrichtung zur Positionsbestimmung
- 16: Sensor zur Objekterkennung
- 17: Kommunikationsverbindung
- 18: Terminalleitsystem
- 19: Datenleitung
- 20: erster Kreuzungsbereich
- 21: zweiter Kreuzungsbereich

- B: separater Betriebsbereich
- B1: erster Bereich
- B2: zweiter Bereich
- L: Längsrichtung
- L1-Ln: Längsgassen
- Q: Querrichtung
- Q1-Qn: Quergassen

## Patentansprüche

1. System zum Transport von Containern mittels Schwerlastfahrzeugen (8a, 8b, 8c), das mindestens ein automatisch geführtes Schwerlastfahrzeug (8a) und mindestens ein manuell geführtes Schwerlastfahrzeug (8b, 8c) sowie einen separaten Betriebsbereich (B) umfasst, in dem das mindestens eine automatisch geführte Schwerlastfahrzeug (8a) und das mindestens eine manuell geführte Schwerlastfahrzeug (8b, 8c) gemeinsam in einem Mischverkehr betreibbar sind, wobei das System ein Flottenleitsystem (12) umfasst, das eingerichtet ist, um den Mischverkehr der Schwerlastfahrzeuge (8a, 8b, 8c) in dem separaten Betriebsbereich (B) durch kontinuierliche Verarbeitung der Positionen des automatisch geführten Schwerlastfahrzeugs (8a) sowie durch Vorgabe von Routen für das automatisch geführte Schwerlastfahrzeug (8a) zu koordinieren, wobei eine drahtlose Kommunikationsverbindung (17) zwischen dem automatisch geführten Schwerlastfahrzeug (8a) und dem Flottenleitsystem (12) vorgesehen ist, wobei das automatisch geführte Schwerlastfahrzeug (8a), insbesondere dessen Fahrzeugsteuerung, mit einer Einrichtung zur automatischen Navigation (14) und/oder mit einer Einrichtung zur Positionsbestimmung (15) und/oder mit einem Sensor zur Objekterkennung (16) versehen ist, **dadurch gekennzeichnet, dass** das Flottenleitsystem (12) eingerichtet ist, um den Mischverkehr der Schwerlastfahrzeuge (8a, 8b, 8c) in dem separaten Betriebsbereich (B) durch kontinuierliche Verarbeitung der Positionen sowohl des automatisch geführten Schwerlastfahrzeugs (8a) als auch des manuell geführten Schwerlastfahrzeugs (8b, 8c) sowie durch Vorgabe von Routen sowohl für das automatisch geführte Schwerlastfahrzeug (8a) als auch für das manuell geführte Schwerlastfahrzeug (8b, 8c) zu koordinieren, wobei innerhalb des separaten Betriebsbereichs (B) das manuell geführte Schwerlastfahrzeug (8b, 8c) mit einem Fahrerinformationssystem (13) versehen ist und das Fahrerinformationssystem (13) mit dem Flottenleitsystem (12) verbunden ist, um einem Fahrer des manuell geführten Schwerlastfahrzeugs (8b, 8c) Anweisungen für das manuelle Führen des Schwerlastfahrzeugs (8b, 8c) zu geben, und wobei die drahtlose Kommunikationsverbindung (17) zwischen den Schwerlastfahrzeugen (8a, 8b, 8c) und dem Flottenleitsystem (12) vorgesehen ist.

2. System nach Anspruch 1, **dadurch gekennzeichnet, dass** das Flottenleitsystem (12) eingerichtet ist, um den Mischverkehr der Schwerlastfahrzeuge (8a, 8b, 8c) in dem separaten Betriebsbereich (B) durch Blockieren von Bereichen sowohl für das automatisch geführte Schwerlastfahrzeug (8a) als auch für das manuell geführte Schwerlastfahrzeug (8b, 8c) zu koordinieren.

3. System nach Anspruch 1 oder 2, **dadurch gekennzeichnet, dass** das Fahrerinformationssystem (13) als mobiles Gerät ausgebildet ist, das an dem manuell geführten Schwerlastfahrzeug (8b, 8c) vor dessen Einfahrt in den Betriebsbereich (B) angeordnet, vorzugsweise dem Fahrer übergeben, und innerhalb des Betriebsbereichs (B) von dem Schwerlastfahrzeug (8b, 8c) mitgeführt wird.

4. System nach einem der vorhergehenden Ansprüche, **dadurch gekennzeichnet, dass** das Fahrerinformationssystem (13) an dem manuell geführten Schwerlastfahrzeug (8b, 8c) fest installiert ist.

5. System nach einem der vorhergehenden Ansprüche, **dadurch gekennzeichnet, dass** das System, insbesondere dessen separater Betriebsbereich (B), Teil eines Containerterminals (1), RoRo-Terminals, Logistikzentrums oder Industriebetriebs ist.

6. System nach einem der vorhergehenden Ansprüche, **dadurch gekennzeichnet, dass** in dem separaten Betriebsbereich (B) mindestens eine erste Fahrspur für das automatisch geführte Schwerlastfahrzeug (8a) und mindestens eine zweite Fahrspur für das manuell geführte Schwerlastfahrzeug (8b, 8c) reserviert ist.

7. System nach Anspruch 6, **dadurch gekennzeichnet, dass** die ersten und zweiten Fahrspuren jeweils durch einen Übergabebereich eines Umschlaggeräts eines Lagerbereichs (5a) geführt sind und hierbei jeweils seitlich an dem Lagerbereich (5a) angeordnet sind, vorzugsweise jeweils in einer von zwei gegenüberliegend an den Lagerbereich (5a) angrenzenden Lagergassen.

8. System nach Anspruch 6 oder 7, **dadurch gekennzeichnet, dass** die Fahrspuren zumindest abschnittsweise physikalisch voneinander getrennt sind, insbesondere über Fahrbahnmarkierungen und/oder Leitelemente (6).

9. System nach einem der Ansprüche 6 bis 8, **dadurch gekennzeichnet, dass** die ersten und zweiten Fahrspuren sich in einem Kreuzungsbereich (20, 21) von zwei Lagergassen kreuzen, in dem vorzugsweise Fahrbahnmarkierungen und/oder Leitelemente (6) so angeordnet sind, dass der Kreuzungsbereich (20) als Überquerungskreuzung ausgebildet ist oder der Kreuzungsbereich (21) als Abbiegekreuzung ausgebildet ist.

10. System nach einem der Ansprüche 6 bis 9, **dadurch gekennzeichnet, dass** das manuell geführte Schwerlastfahrzeug (8b, 8c) im Betriebsbereich (B) im Uhrzeigersinn und das automatisch geführte Schwerlastfahrzeug (8a) im Betriebsbereich (B) entgegen des Uhrzeigersinns oder jeweils umgekehrt verkehrt.

11. System nach einem der Ansprüche 6 bis 9, **dadurch gekennzeichnet, dass** das manuell geführte Schwerlastfahrzeug (8b, 8c) und das automatisch geführte Schwerlastfahrzeug (8a) im Betriebsbereich (B) im oder entgegen des Uhrzeigersinns verkehren.

## Claims

1. A system for transporting containers by means of heavy-duty vehicles (8a, 8b, 8c) which comprises at least one automatically guided heavy-duty vehicle (8a) and at least one manually guided heavy-duty vehicle (8b, 8c) and a separate operating area (B), in which the at least one automatically guided heavy-duty vehicle (8a) and the at least one manually guided heavy-duty vehicle (8b, 8c) can be operated together in mixed mode traffic, wherein the system comprises a fleet guidance system (12) which is designed to coordinate the mixed mode traffic of the heavy-duty vehicles (8a, 8b, 8c) in the separate operating area (B) by continuous processing of the positions of the automatically guided heavy-duty vehicle (8a) and by specification of routes for the automatically guided heavy-duty vehicle (8a), wherein a wireless communication connection (17) is provided between the automatically guided heavy-duty vehicle (8a) and the fleet management system (12), wherein the automatically guided heavy-duty vehicle (8a), in particular its vehicle control system, is provided with a device for automatic navigation (14) and/or with a device for position determination (15) and/or with a sensor for object detection (16), **characterized in that** the fleet management system (12) is designed to coordinate the mixed mode traffic of the heavy-duty vehicles (8a, 8b, 8c) in the separate operating area (B) by continuous processing of the positions both of the automatically guided heavy-duty vehicle (8a) and of the manually guided heavy-duty vehicle (8b, 8c) and by specification of routes both for the automatically guided heavy-duty vehicle (8a) and for the manually guided heavy-duty vehicle (8b, 8c), wherein, within the separate operating area (B), the manually guided heavy-duty vehicle (8b, 8c) is provided with a driver information system (13) and the driver information system (13) is connected to the fleet management system (12), in order to give a driver of the manually guided heavy-duty vehicle (8b, 8c) instructions for the manual guidance of the heavy-duty vehicle (8b, 8c) and wherein the wireless communication connection (17) is provided between the heavy-duty vehicles (8a, 8b, 8c) and the fleet management system (12).

2. The system as claimed in claim 1, **characterized in that** the fleet management system (12) is designed to coordinate the mixed mode traffic of the heavy-duty vehicles (8a, 8b, 8c) in the separate operating area (B) by blocking of areas both for the automatically guided heavy-duty vehicle (8a) and for the manually guided heavy-duty vehicle (8b, 8c).

3. The system as claimed in claim 1 or 2, **characterized in that** the driver information system (13) is designed as a mobile device, which is arranged at the manually guided heavy-duty vehicle (8b, 8c) before it enters the operating area (B), preferably is given to the driver, and is carried along by the heavy-duty vehicle (8b, 8c) within the operating area (B).

4. The system as claimed in one of the preceding claims, **characterized in that** the driver information system (13) is permanently installed at the manually guided heavy-duty vehicle (8b, 8c).

5. The system as claimed in one of the preceding claims, **characterized in that** the system, in particular its separate operating area (B), is part of a container terminal (1), Ro-Ro terminal, logistics center or industrial plant.

6. The system as claimed in one of the preceding claims, **characterized in that** at least one first lane for the automatically guided heavy-duty vehicle (8a) and at least one second lane for the manually guided heavy-duty vehicle (8b, 8c) are reserved in the separate operating area (B).

7. The system as claimed in claim 6, **characterized in that** the first and second lanes respectively lead through a transfer area of a handling device of a storage area (5a) and are respectively arranged here laterally of the storage area (5a), preferably in each case in one of two storage aisles oppositely adjoining the storage area (5a).

8. The system as claimed in claim 6 or 7, **characterized in that** the lanes are physically separated from one another, at least in certain sections, in particular by means of road markings and/or guiding elements (6).

9. The system as claimed in one of claims 6 to 8, **characterized in that** the first and second lanes cross in a crossing area (20, 21) of two storage aisles, in which preferably road markings and/or guiding elements (6) are arranged such that the crossing area (20) is designed as a crossover crossing or the crossing area (21) is designed as a turn crossing.

10. The system as claimed in one of the claims 6 to 9, **characterized in that** the manually guided heavy-duty vehicle (8b, 8c) drives around clockwise in the operating area (B) and the automatically guided heavy-duty vehicle (8a) drives around counterclockwise in the operating area (B), or vice versa.

11. The system as claimed in one of the claims 6 to 9, **characterized in that** the manually guided heavy-duty vehicle (8b, 8c) and the automatically guided heavy-duty vehicle (8a) drive around clockwise or counterclockwise in the operating area (B).

## Revendications

1. Système de transport de conteneurs au moyen de véhicules poids lourds (8a, 8b, 8c), lequel système comprend au moins un véhicule poids lourd à guidage automatique (8a) et au moins un véhicule poids lourd à guidage manuel (8b, 8c) ainsi qu'une zone d'exploitation séparée (B) dans laquelle l'au moins un véhicule poids lourd à guidage automatique (8a) et l'au moins un véhicule poids lourd à guidage manuel (8b, 8c) peuvent être utilisé conjointement dans un trafic mixte, le système comprenant un système de gestion de flotte (12) qui est conçu pour coordonner le trafic mixte de véhicules poids lourds (8a, 8b, 8c) dans la zone d'exploitation séparée (B) en traitant en continu les positions des véhicules poids lourds à guidage automatique (8a) et en spécifiant des itinéraires pour le véhicule poids lourd à guidage automatique (8a), une liaison de communication sans fil (17) étant prévue entre le véhicule poids lourd à guidage automatique (8a) et le système de gestion de flotte (12), le véhicule poids lourd à guidage automatique (8a), en particulier sa commande de véhicule, étant pourvu d'un dispositif de navigation automatique (14) et/ou d'un dispositif de détermination de position (15) et/ou d'un capteur de reconnaissance d'objet (16), **caractérisé en ce que** le système de gestion de flotte (12) est conçu pour coordonner le trafic mixte de véhicules poids lourds (8a, 8b, 8c) dans la zone d'exploitation séparée (B) en traitant en continu les positions du véhicule poids lourd à guidage automatique (8a) ainsi que celles du véhicule poids lourd à guidage manuel (8b, 8c) et en spécifiant des itinéraires pour le véhicule poids lourd à guidage automatique (8a) et pour le véhicule poids lourd à guidage manuel (8b, 8c), à l'intérieur de la zone d'exploitation séparée (B) le véhicule poids lourd à guidage manuel (8b, 8c) étant pourvu d'un système d'information de conducteur (13) et le système d'information de conducteur (13) étant relié au système de gestion de flotte (12) pour donner à un conducteur du véhicule poids lourd à guidage manuel (8b, 8c) des instructions relatives à la conduite manuelle du véhicule poids lourd (8b, 8c), et la liaison de communication sans fil (17) étant prévue entre les véhicules poids lourds (8a, 8b, 8c) et le système de gestion de flotte (12).

2. Système selon la revendication 1, **caractérisé en ce que** le système de gestion de flotte (12) est conçu pour coordonner le trafic mixte des véhicules poids lourds (8a, 8b, 8c) dans la zone d'exploitation séparée (B) en bloquant des zones pour le véhicule poids lourd à guidage automatique (8a) et pour le véhicule poids lourd à guidage manuel (8b, 8c).

3. Système selon la revendication 1 ou 2, **caractérisé en ce que** le système d'information de conducteur (13) est conçu comme un appareil mobile qui est disposé au niveau du véhicule poids lourd à guidage manuel (8b, 8c) avant que celui-ci n'entre dans la zone d'exploitation (B), de préférence est remis au conducteur, et est emporté à l'intérieur de la zone d'exploitation (B) par le véhicule poids lourd (8b, 8c).

4. Système selon l'une des revendications précédentes, **caractérisé en ce que** le système d'information de conducteur (13) est installé de manière fixe sur le véhicule poids lourd à guidage manuel (8b, 8c).

5. Système selon l'une des revendications précédentes, **caractérisé en ce que** le système, notamment sa zone d'exploitation séparée (B), fait partie d'un terminal de conteneurs (1), d'un terminal RoRo, d'un centre logistique ou d'une entreprise industrielle.

6. Système selon l'une des revendications précédentes, **caractérisé en ce que** dans la zone d'exploitation séparée (B) au moins une première voie de roulement est réservée au véhicule poids lourd à guidage automatique (8a) et au moins une deuxième voie de roulement est réservée au véhicule poids lourds à guidage manuel véhicule (8b, 8c).

7. Système selon la revendication 6, **caractérisé en ce que** les première et deuxième voies de roulement sont chacune guidées à travers une zone de transfert d'un appareil de manutention d'une zone de stockage (5a) et sont chacune disposées latéralement à la zone de stockage (5a), de préférence à chaque fois dans l'une des deux allées de stockage opposées adjacentes à la zone de stockage (5a).

8. Système selon la revendication 6 ou 7, **caractérisé en ce que** les voies de roulement sont au moins par portions séparées physiquement les unes des autres, notamment par le biais de marquages au sol et/ou d'éléments de guidage (6).

9. Système selon l'une des revendications 6 à 8, **caractérisé en ce que** les première et deuxième voies de roulement se croisent dans une zone d'intersection (20, 21) de deux allées de stockage dans laquelle de préférence des marquages au sol et/ou des éléments de guidage (6) sont disposés de sorte que la zone d'intersection (20) est conçue comme une intersection de traversée ou la zone d'intersection (21) est conçue comme une intersection de détournement.

10. Système selon l'une des revendications 6 à 9, **caractérisé en ce que** le véhicule poids lourd à guidage manuel (8b, 8c) circule dans la zone d'exploitation (B) dans le sens horaire et le véhicule poids lourd à guidage automatique (8a) circule dans la zone d'exploitation (B) dans le sens antihoraire ou inversement.

11. Système selon l'une des revendications 6 à 9, **caractérisé en ce que** le véhicule poids lourd à guidage manuel (8b, 8c) et le véhicule poids lourd à guidage automatique (8a) circulent dans la zone d'exploitation (B) dans le sens horaire ou antihoraire.
